# EUROPEAN PATENT APPLICATION

(11) **EP 4 703 695 A1**
(43) Date of publication of application: **04.03.2026**
(21) Application number: 24197867.5
(22) Date of filing: 02.09.2024
(51) Int. Cl.: G01J 1/02, G01J 1/04, G01J 1/42

(54) **DEVICE FOR MEASURING SOLAR RADIATION**

(71) Applicant: HELLA GmbH & Co. KGaA, 59552 Lippstadt (DE)
(72) Inventor: Avram, Sebastian, Timisoara (RO); Dragomir, Marius Nicolae, 300709 Timisoara (RO); Nastase, Eugen, 300362 Timisoara (RO); Cenuse, George, 300724 Timisoara (RO); Ciof, Cristina Camelia, 307352 Bucovat (RO); Coman, Adrian, 300538 Timisoara (RO)
(74) Representative: Behr-Wenning, Gregor

(57) **Abstract**

The invention comprises a device (100) for measuring (120) solar radiation in the interior (211) of a driver's cabin (210) of a commercial vehicle (200), comprising:
- a spherical lens (10) configured for providing a focused light beam (L2) opposite [along] to a vertical direction (z) based on collected solar radiation (L1) which is specific for the interior (211) of a driver's cabin (210) of a commercial vehicle (200),
- a sensor (20) configured for measuring (120) the focused light beam (L2), wherein the sensor (20) is configured for providing a sensor signal (S3) based on the measured focused light beam (L2),
- an interface (30) configured for transmitting (130) the sensor signal (S3) to an electronic control unit (ECU).

Furthermore, the invention comprises a corresponding method, computer program product, computer readable storage medium and a commercial vehicle (200).

## Description

The present invention relates to a device for measuring solar radiation, a corresponding method, computer program product, computer readable storage medium and commercial vehicle.

Commercial vehicles for transporting goods and/or persons, e.g. trucks or busses are widely used. Currently, there is a drive towards increased window glass size of the driver's cabin to provide a better view for the driver and/or to reduce risks (e.g. for pedestrians) due to a dead (viewing) angle (of the driver).

However, known commercial vehicles, in particular with large windows, have drawbacks. The temperature in an interior of the commercial vehicle, in particular inside a driver's cabin, can be increased by the sun and/or (external) solar radiation, which introduces heat. This can necessitate additional isolation and/or larger (more powerful) climate systems (which increases the weight). Climate systems can be used to change the temperature, e.g. by cooling. However, there is no (direct) information about the solar radiation and/or power emitted into the commercial vehicle. Furthermore, the temperature cannot be influenced location specific, in particular since no location-specific information is available.

Consequently, it may be one objective problem of the present invention to (at least partly) overcome at least one of the aforementioned disadvantages. In particular, it can be an objective to provide a device and/or commercial vehicle with optimized comfort, costs, flexibility, expandability, environmental friendliness, robustness, information, weight and/or simplicity.

The above objective problem is solved by a device for measuring solar radiation with the features of the independent claim regarding a device, a method with the features of the method claim, a computer program product with the features of the independent claim regarding a computer program product, a computer readable storage medium with the features of the independent claim regarding a computer readable storage medium, an electronic control unit with the features of the independent claim regarding an electronic control unit and a commercial vehicle with the features of the independent claim regarding a commercial vehicle. Further features and details of the invention are shown in the dependent claims, the description and the drawings. Features and details which are described with respect to the disclosed device also apply to the disclosed method, computer program product, computer readable storage medium, electronic control unit and/or commercial vehicle and vice versa, so that reference is or can always be made mutually with regard to the disclosure of the individual aspects of the invention. In particular, features corresponding to the first aspect of the invention may also be part of the second aspect, third aspect, fourth aspect and/or fifth aspect of the invention and vice versa.

According to a first aspect of the invention, the above objective problem is solved by a device for measuring solar radiation in (emitted into) the interior of a driver's cabin of a commercial vehicle, comprising:
- a spherical lens configured for providing a focused light beam opposite to a vertical direction based on collected solar radiation which is specific for the interior of a driver's cabin of a commercial vehicle,
- a sensor configured for measuring the focused light beam, wherein the sensor is configured for providing a sensor signal based on the measured focused light beam,
- an interface configured for transmitting the sensor signal to an electronic control unit.

The device is suitable to measure the intensity of solar radiation and/or light (in this spectrum) which is entering the driver's cabin and/or the surrounding of the device. This can also include scatter light inside of the cabin. The solar radiation can comprise a location specific (intensity) distribution. Consequently, the device can be mounted inside of the driver's cabin, preferably behind the front window, in particular in a distance of the windshield (e.g. 20 cm behind of it). Preferably, the device can be mounted on the dashboard, e.g. in the center of the dashboard and/or in a distance to the front window (windshield). Alternatively, the device can be mounted on the center console. The device may comprise a (flexible detachable) fastening means (positioned at the bottom of the housing), in particular a magnet and/or screwing element. Preferably, the fastening means may be configured for manual operation, e.g. by a knurled nut. Preferably, the device is not mounted (directly) at and/or on a window. This can be advantageous since the solar radiation inside (and not outside) of the driver's cabin is of interest. Consequently, the device may preferably be positioned distanced from the window(s) and/or glass of the driver's cabin. The driver's cabin can consequently be and/or provide a surrounding volume of the device. In particular, the driver's cabin is not part of the device. The device can be described as a means for measuring the intensity and/or intensity distribution of solar radiation. Based on this information, a climate system can be controlled (see below).

A spherical lens can be configured for providing a focused light beam opposite to (or along) a vertical direction based on collected solar radiation which is specific for the interior of a driver's cabin of a commercial vehicle, wherein the vertical direction can be oriented from the bottom (e.g. street) to the top (e.g. sky). A longitudinal direction perpendicular to the vertical direction can be oriented along driving direction of the commercial vehicle. A side direction can be perpendicular to the longitudinal direction and/or perpendicular to the vertical direction, in particular pointing from a right side to a left side of the commercial vehicle and/or driver's cabin (when facing the front and/or driving direction). A spherical lens can be configured for providing focused light (to the sensor) based on collected and/or focused solar radiation which is specific for (emitted into and/or reflected inside of) the interior of a driver's cabin of a commercial vehicle. The solar radiation can enter the driver's cabin through window glass and/or from different sides, e.g. from the front (via the windshield) and/or from the left (window) and/or right (window). Additionally, scattering may occur. Consequently, the spherical lens can be configured to collect solar radiation (preferably homogeneously) from different angles, e.g. by a convex shape (on the top and/or bottom of the spherical lens). The spherical lens can be configured for focusing the (collected) solar radiation to provide a focused light beam. The focused light beam is (optically) provided to the sensor.

A sensor can be configured for measuring the focused light beam, in particular by positioning (directly) below the spherical lens (against longitudinal direction). This can increase the signal to noise ratio and/or reduce the overall size (height) of the device. The sensor is configured for providing a sensor signal based on the measured focused light beam, in particular based on the intensity of the (measured) focused light beam provided to the sensor. The sensor signal may be high if a high intensity of solar radiation is detected (and vice versa). The sensor signal may comprise information about the intensity and/or direction (angle) which is specific for the solar radiation. Therefore, the sensor (signal) can be configured to provide information about the origin, angle and/or side (left and/or right side) of the solar radiation.

An interface can be configured for data communication and/or for transmitting the sensor signal to an (external) electronic control unit, which preferably is not part of and/or not integrated in the device. The electronic control unit can be configured for controlling a climate system based on the sensor signal(s). Therefore, the interface can comprise a data communication line, e.g. a cable and/or be configured for communication via LIN. The interface may comprise a switch and/or (physical) integrated circuit, in particular configured for managing, combining and/or gathering sensor signal(s) from one or two (or more) sensor(s). The interface may be mounted on a printed circuit board and/or close to the sensor(s). Preferably, the sensor(s) are connected to the interface via a data connection, in particular a cable and/or conductor track(s).

In the context of the present invention, a device may be provided wherein the spherical lens is configured for collecting solar radiation from at least
- a front side of the device, which (when the device is mounted) is oriented perpendicular to a longitudinal direction, wherein in particular the vertical direction is oriented perpendicular to the longitudinal direction, and
- a left side of the device, which (when the device is mounted) is oriented perpendicular to a side direction, wherein in particular the side direction is oriented perpendicular to the longitudinal direction and the vertical direction, and
- a right side of the device, which (when the device is mounted) is oriented perpendicular to the side direction.

The front side can be a surface and/or face of the device (e.g. the housing) and/or a plane, which in particular is oriented perpendicular to and/or along the longitudinal direction, e.g. when the device is mounted. The left side can be a surface and/or face of the device (e.g. the housing) and/or a plane, which in particular is oriented perpendicular to and/or along (or against) the side direction, e.g. when the device is mounted. The right side can be a surface and/or face of the device (e.g. the housing) and/or a plane, which in particular is oriented perpendicular to and/or against (or along) the side direction, e.g. when the device is mounted. The spherical lens can be configured (e.g. by the geometrical and/or volumetric shape) to provide a focused light beam comprising two or three sections, wherein each section can provide a (separate) light beam depending on a direction and/or angle. For example, the spherical lens may comprise a left section for providing a left focused light beam, which is specific for light originating from the left side of the device (e.g. the right half of the driver's cabin). For example, the spherical lens may comprise a right section for providing a right focused light beam, which is specific for light originating from the right side of the device (e.g. the right half of the driver's cabin). For example, the spherical lens may comprise a front section for providing a front focused light beam, which is specific for light originating from the front side of the device (e.g. the right half of the driver's cabin). Consequently, the focused light beam(s) can provide location and/or direction specific information. The sensor(s) may be configured to measure the/this (location specific) intensity and/or direction. Consequently, the sensor signal(s) may comprise information about intensity and/or direction. This can provide location and/or direction specific information (via the sensor signal) to the electronic control unit. This means that an improved temperature regulation can be provided by the electronic control unit and/or the climate system (which is controlled by the electronic control unit).

In the context of the present invention, a device may be provided wherein the spherical lens is configured for collecting solar radiation from an angle of at least 120°, in particular up to 180°, e.g. 210°, preferably 240°, in particular 270°, advantageously 320°, wherein in particular the angle covers the front side, the left side and the right side of the device.

The angle can exclude the back of the driver's cabin (which normally is not transparent for light). Therefore, the angle can be oriented in a plane defined by the longitudinal direction and/or side direction (Azimuth). Preferably, the device can collect and/or measure solar radiation in an (elevation) angle of at least 60°, e.g. 90°, preferably 120°, in particular 150°, advantageously 180°. To increase the angle, the spherical lens can (at least partly) be convex and/or curved (with respect to the top and/or along vertical direction).

In the context of the present invention, a device may be provided wherein the spherical lens comprises at least partially a convex and/or curved shape.

The convex and/or curved shape can be oriented along and/or against the vertical orientation. A convex shape pointing along the vertical direction can improve the percentage of solar light that is captured. This can improve the signal-to-noise-ratio and/or information density. A convex shape pointing against the vertical direction and/or towards the sensor can influence and/or shape the focus and/or collimation of the focused light beam(s). Therefore, the convex and/or curved shape (or its top) can be oriented towards the sensor(s). The convex and/or curved shape can (at least partly) comprise a spherical and/or ball-shaped geometry. Simulations of the device, in particular the spherical lens and/or sensor, can be used to optimize the percentage of gathered light and/or the focused light beam(s). The simulation can be performed based on the geometry of the desired environment the device will be used in. For example, the simulations can include the driver's cabin, in particular the windows, and/or include several scenarios including different solar radiation intensity distributions, which preferably are likely in a real implementation. Alternatively, and/or in addition, the spherical lens may also be selected and/or manipulated during construction, in particular using different lightning scenarios. For example, a look-up table may be generated (and saved in the electronic control unit) which provides optimized controlling of the climate system based on the sensor signal(s). The spherical lens can comprise a transparent material, preferably PMMA.

In the context of the present invention, a device may be provided wherein the spherical lens comprises at least two or three volumetric sections (sub-volumes), in particular comprising at least in parts an elliptical shape and/or convex shape (in particular cross-section).

The volumetric sections can comprise a three-dimensional polygonal shape configured for improved light collection properties and/or focusing to provide a focused light beam. For example, the volumetric sections can (at least partly) be convex. The volumetric sections and/or their cross sections may be connected and/or (at least partly) overlapping (e.g. like a mountain chain with two or three tops). The cross section can for example be oval and/or elliptical, in particular with decreasing size (towards the top, which points downwards towards the sensor and/or upwards along the vertical direction). A single spherical lens with (only) two or three volumetric sections can reduce the costs and/or complexity. Preferably, only one sensor can be used, while still providing information about the direction of the solar radiation (e.g. by using a 4-Quadrant Silicon PIN Photodiode, like K857PE provided by Vishay Semiconductors). The spherical lens may comprise a pair of two or (preferably) three volumetric sections, which are positioned on a left and/or right side of the device (when facing the longitudinal direction). This can be advantageous to provide two separate focused light beams (e.g. a left and right focused light beam), which can provide improved information about directionality of the solar radiation. Preferably, the left and right part of the spherical lens may each be positioned above a separate sensor, in particular a left and a right sensor (each providing a separate sensor signal). This can lead to improved separation between solar radiation from the left side and the right side.

In the context of the present invention, a device may be provided wherein the sensor is integrated in and/or positioned on a printed circuit board, wherein the printed circuit board is positioned below the spherical lens and perpendicular to the vertical direction.

The printed circuit board may be connected to the interface and/or comprises (at least parts of) the interface. The interface may be configured for data communication and/or transmitting and/or for providing power to the sensor and/or printed circuit board. The printed circuit board may be connected to the sensor(s) and/or the electronic control unit via data connection(s), e.g. by cables and/or conductor tracks on the printed circuit board. The data connection(s) may comprise and/or be configured for LIN connection. The printed circuit board may be configured for transmitting the sensor signal(s) to the electronic control unit. Preferably, the printed circuit board may comprise at least two, preferably three slots configured for mounting a sensor element. This means that the printed circuit board may be configured for a first configuration with only one (centrally) mounted sensor and a second configuration with two sensor elements (on the left and right side), in particular also for a third configuration where all slots comprise a sensor element. This can optimize the costs, flexibility, expandability and/or environmental friendliness.

In the context of the present invention, a device may be provided wherein the sensor is configured for differentiating at least between collected solar radiation originating from a left side volume of the driver's cabin and collected solar radiation originating from a right side volume of the driver's cabin, and in particular collected solar radiation originating from a front volume (facing the front and/or in front of the device) of the driver's cabin, wherein in particular the sensor(s) (each) comprise(s) a four quadrant diode and/or (two or three) ASIC device(s).

A differentiation may be provided as described above. Therefore, the device can provide (at least) a left and right focused light beam and/or a left and right sensor signal, which preferably are specific for a left and right side (volume) of the device and/or driver's cabin. Consequently, the device may be configured for measuring and/or distinguishing solar radiation, which is specific for a driver (in a driver seat/side on the left), and/or a passenger (co-driver, in particular on a right seat/side). The quadrant diode (one alone) can provide for information about the directionality of the light. The ASIC can for example be a VEML6031 X00 "High Accuracy Ambient Light Sensor" produced by Vishay Semiconductors.

In the context of the present invention, a device may be provided wherein the device comprises a housing configured for receiving the spherical lens, the sensor and the interface, wherein in particular the printed circuit board and/or the interface are located at a bottom of the housing (when mounted).

The housing may comprise Polycarbonate (PC), in particular PC LEXAN. The housing may be produced by molding. The housing may comprise a cuboid shape, which preferably can be open on the top (to allow mounting and/or to be closed by the cover). The housing can have a length of approximately 44,2 mm along the side direction, 32,2 mm along the longitudinal direction and a total height of 26,3 mm along the vertical direction. The housing can be configured for receiving the printed circuit board, which may be located between the bottom of the housing and the sensor and/or spherical lens. The housing, in particular the bottom of the housing, may comprise (at least a part of) the interface, in particular a plug and/or socket, configured for data connection and/or power supply. Preferably, this can comprise a reversible detachable plug and/or socket combination. For example, the housing and/or interface and/or printed circuit board may comprise three press fit pins, which preferably can be connected via a plug and/or socket. The three press fit pins may be configured for providing data communication and/or power supply. The three press fit pins may be integrated and/or surrounded by the (overmolded) housing.

In the context of the present invention, a device may be provided wherein the device, in particular the housing, comprises a cover in which the spherical lens is integrated, wherein in particular the cover is oriented perpendicular to the vertical direction (when mounted on the housing and/or when the device is mounted in the driver's cabin).

The cover may be mounted on top of the housing. The cover may be configured to close the housing and/or protect the sensor, spherical lens, printed circuit board and/or interface. The cover may comprise Polycarbonate (PC), in particular PC LEXAN. The housing may be produced by molding, in particular two-component injection molding, wherein the cover may comprise the spherical lens. The spherical lens may be integrated in the cover, preferably in the center of the cover. The cover may comprise a recess to receive the spherical lens. The recess may have a complementary shape compared to the spherical lens (in particular the cross-section of the spherical lens). The cover may comprise a rectangular shape, in particular perpendicular to the vertical direction.

In the context of the present invention, a device may be provided wherein the cover comprises a latching device configured for engaging with a (complementary formed) counter-latching device of the housing.

The latching device(s) may comprise a latching opening. The counter-latching device(s) may comprise a latching nose. This can provide for a flexible detachable closing of the housing. This can provide a flexible and/or easy maintenance and/or repair and/or change. Preferably, a latching device and/or counter-latching device may be positioned on the front, rear, left and/or right side of the cover and/or housing. This allows for improved stability and/or protection.

According to a second aspect of the invention, the above objective problem is solved by a method for measuring solar radiation in the interior of a driver's cabin of a commercial vehicle, comprising:
- providing a device according to the first aspect,
- measuring, by a sensor of the device, a focused light beam which is specific for the (solar radiation within an) interior of a driver's cabin of a commercial vehicle, to provide a sensor signal,
- transmitting the sensor signal via an interface of the device to an electronic control unit,
- controlling, by the electronic control unit, a temperature in the interior of the driver's cabin, in particular in a part of the driver's cabin.

The electronic control unit may comprise and/or be connected to a climate system. The climate system may be configured for changing the temperature and/or provide cool/warm air to the driver and/or co-driver (e.g. the left and right side of the driver's cabin). The climate system may be configured for changing a ventilator/radiator speed, which can provide heating and/or cooling to the driver and/or passenger (e.g. co-driver). The method can be performed when the device is mounted inside of a driver's cabin of a commercial vehicle, in particular on a dashboard and/or behind (and distanced, e.g. 20 cm) from the front window. The transmitting may be performed via the interface and/or a data connection, in particular via a LIN transmission. The controlling can comprise controlling the climate system configured for providing cold and/or warm air to the driver's cabin, in particular to a left and/or right side volume of the driver's cabin. The controlling can be based on the sensor signal(s), in particular increased cooling (e.g. by cooled air and/or increased ventilation) can be provided when the intensity of the solar radiation is (comparably) high. This can be adjusted and/or calibrated based on simulations and/or calibration e.g. during manufacturing (of the device and/or commercial vehicle). The controlling may be based on sensor signals, e.g. on a left and/or right sensor signal, which can be specific for a solar radiation on the left and/or right side of the driver's cabin.

This means that the same technical advantages may be realized with respect to the method according to the second aspect, which have already been described above for the device according to the first aspect of the invention.

According to a third aspect of the invention, the above objective problem is solved by a computer program product comprising instructions, which, when the computer program product is executed by a computer, cause the computer to implement the method according to the second aspect of the invention.

This means that the same technical advantages may be realized with respect to the computer program product according to the third aspect, which have already been described above for the device according to the first aspect of the invention and/or the method according to the second aspect of the invention.

According to a fourth aspect of the invention, the above objective problem is solved by a computer-readable storage medium in which instructions are stored which, when executed by a computer, cause the computer to implement the method according to the second aspect of the invention.

This means that the same technical advantages may be realized with respect to the computer-readable storage medium according to the fourth aspect, which have already been described above for the device according to the first aspect of the invention and/or the method according to the second aspect of the invention and/or the computer program product according to the third aspect of the invention.

According to a fifth aspect of the invention, the above objective problem is solved by an electronic control unit, comprising a computing unit and/or a memory unit, in which instructions are stored which, when at least partially executed by the computing unit, implement a method according to the second aspect of the invention.

This means that the same technical advantages may be realized with respect to the electronic control unit according to the fifth aspect, which have already been described above for the device according to the first aspect of the invention and/or the method according to the second aspect of the invention and/or the computer program product according to the third aspect of the invention and/or the computer-readable storage medium according to the fourth aspect of the invention.

According to a sixth aspect of the invention, the above objective problem is solved by a commercial vehicle comprising a device according to the first aspect of the invention and/or an electronic control unit according to the fifth aspect of the invention.

This means that the same technical advantages may be realized with respect to the commercial vehicle according to the sixth aspect, which have already been described above for the device according to the first aspect of the invention and/or the method according to the second aspect of the invention and/or the computer program product according to the third aspect of the invention and/or the computer-readable storage medium according to the fourth aspect of the invention and/or an electronic control unit according to the fifth aspect of the invention.

Additional technical features, advantages and details of the invention are disclosed by the following description of the figures. The figures provide a detailed description of possible embodiments of the present invention. Therefore, the features described by the claims and the description can be realized alone or in (any) combination. The following exemplary description includes:
- Fig. 1: a method,
- Fig. 2: a commercial vehicle,
- Fig. 3: a device,
- Fig. 4: a device, and
- Fig. 5: a device.
In the following figures identical reference signs are used for identical (or corresponding) features, in particular for different embodiments of the invention.

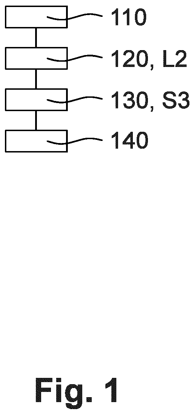

Fig. 1 shows a method for measuring 120 solar radiation L1 in the interior 211 of a driver's cabin 210 of a commercial vehicle 200, comprising:
- providing 110 a device 100 according to any one of the preceding claims,
- measuring 120, by a sensor 20 of the device 100, a focused light beam L2 which is specific for the interior 211 of a driver's cabin 210 of a commercial vehicle 200, to provide a sensor signal S3,
- transmitting 130 the sensor signal S3 via an interface 30 of the device 100 to an electronic control unit ECU,
- controlling 140, by the electronic control unit ECU, a temperature in the interior 211 of the driver's cabin 210, in particular in a part of the driver's cabin 210.

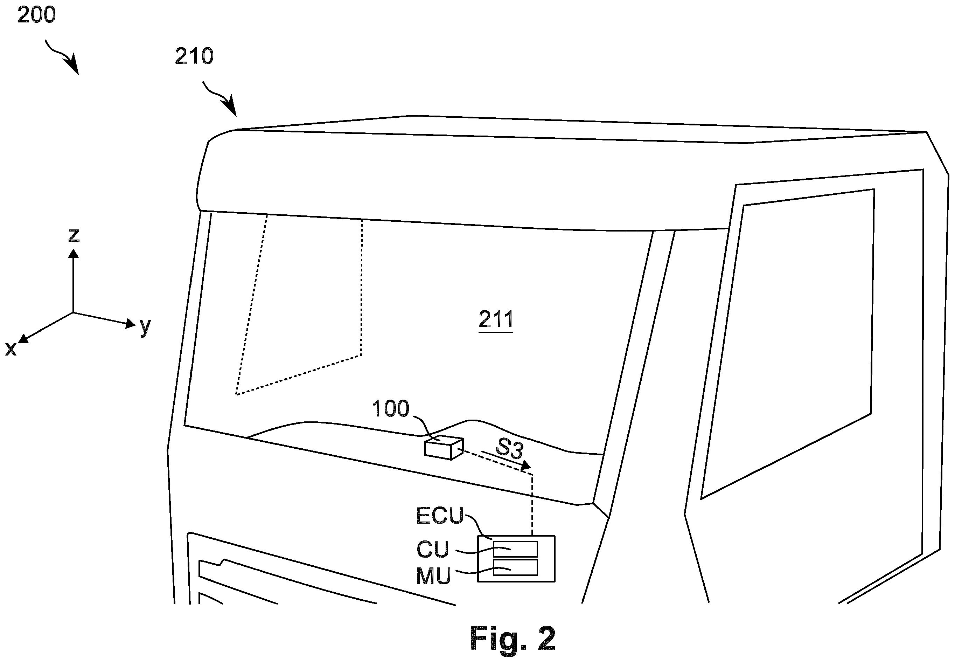

Fig. 2 shows a commercial vehicle 200 comprising a device 100 and an electronic control unit ECU. The electronic control unit ECU, comprises a computing unit CU and/or a memory unit MU, in which instructions are stored which, when at least partially executed by the computing unit CU, implement a method according to the second aspect and/or as shown in Fig. 1. The commercial vehicle 200 may comprise a climate system (not shown) that is controlled by the electronic control unit ECU.

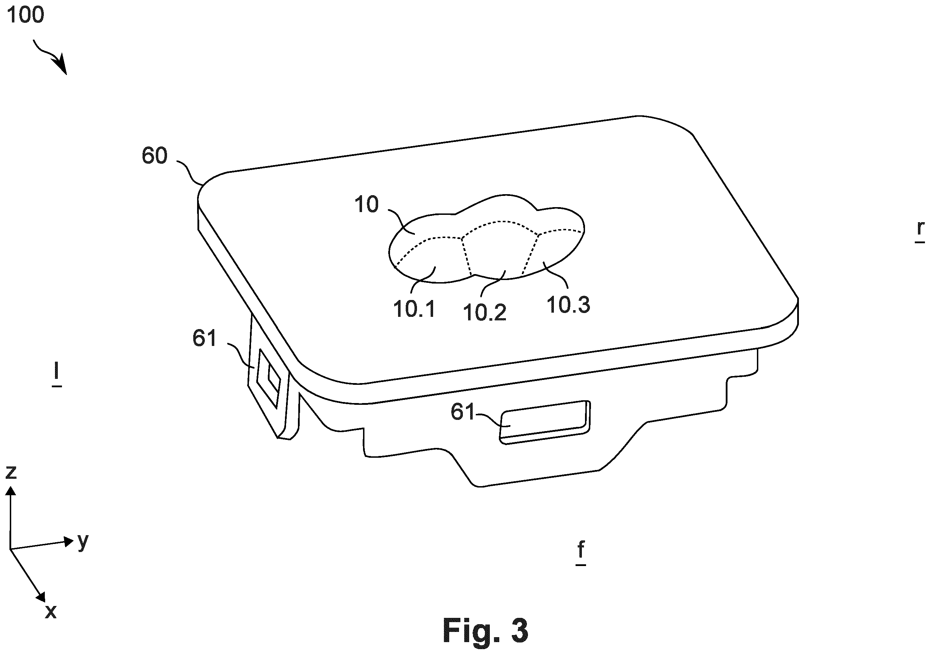

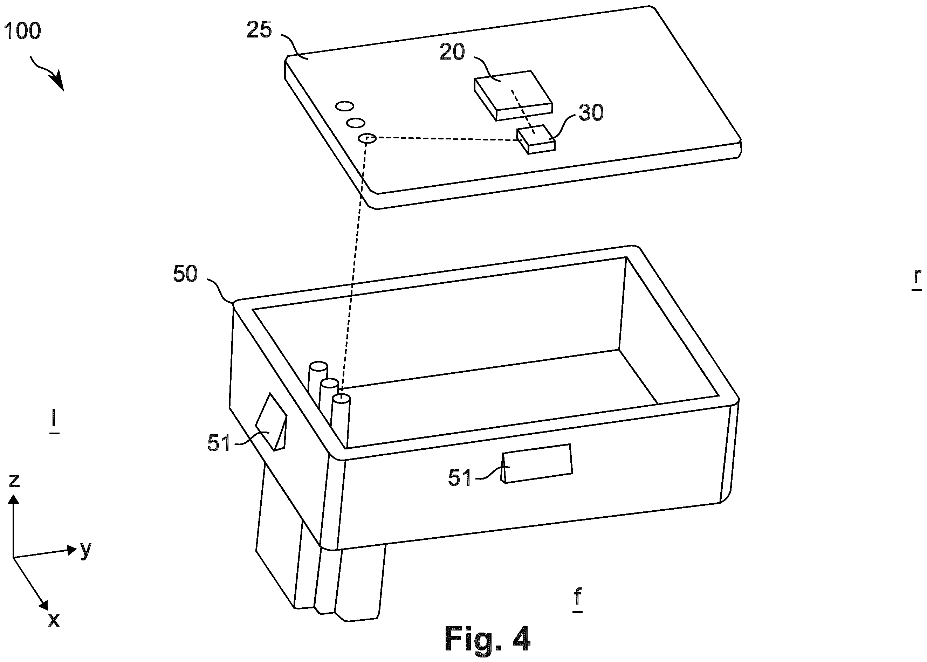

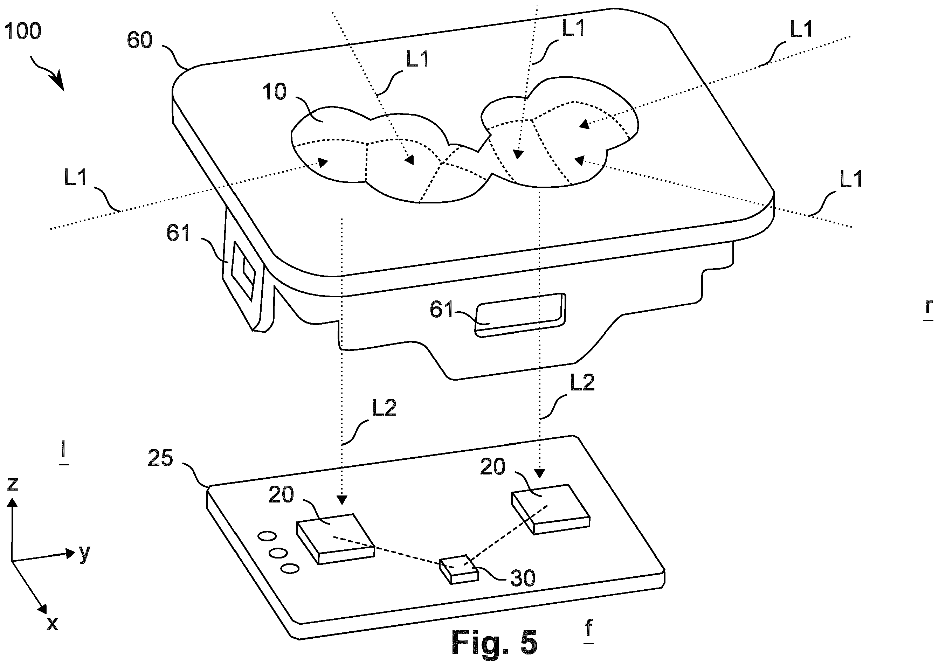

Fig. 3, Fig. 4 and/or Fig. 5 show (parts of) a device 100 for measuring 120 solar radiation in the interior 211 of a driver's cabin 210 of a commercial vehicle 200, comprising:
- a spherical lens 10 (shown from above e.g. in Fig. 3 and 5) configured for providing a focused light beam L2 opposite [along] to a vertical direction z based on collected solar radiation L1 which is specific for the interior 211 of a driver's cabin 210 of a commercial vehicle 200,
- a sensor 20 (see for example Fig. 4 or Fig. 5) configured for measuring 120 the focused light beam L2, wherein the sensor 20 is configured for providing a sensor signal S3 based on the measured focused light beam L2,
- an interface 30 (see for example Fig. 4 or Fig. 5) configured for transmitting 130 the sensor signal S3 to an electronic control unit ECU.

Fig. 3 shows that in the context of the present invention, a device 100 may be provided wherein the cover 60 comprises a latching device 61 configured for engaging with a (e.g. complementary formed) counter-latching device 51 of the housing 50 (shown in Fig. 4 and/or Fig. 5).

Fig. 3 shows that in the context of the present invention, a device may be provided wherein the spherical lens 10 is configured for collecting solar radiation L1 (see Fig. 5) from at least
- a front side f of the device 100, which is oriented perpendicular to a longitudinal direction x, wherein in particular the vertical direction z is oriented perpendicular to the longitudinal x direction, and
- a left side I of the device 100, which is oriented perpendicular to a side direction y, wherein in particular the side direction y is oriented perpendicular to the longitudinal x direction and the vertical direction z, and
- a right side r of the device 100, which is oriented perpendicular to the side direction y.

In the context of the present invention, a device may be provided wherein the spherical lens 10 is configured for collecting solar radiation L1 from an angle a of at least 120°, in particular 180°, wherein in particular the angle a covers the front side f, the left side I and the right side r of the device 100.

In the context of the present invention, a device may be provided wherein the spherical lens 10 comprises at least partially a convex shape.

In the context of the present invention, a device may be provided wherein the spherical lens 10 comprises at least three volumetric sections 10.1, 10.2, 10.3 (Fig. 3 and Fig. 5), in particular comprising at least in parts an elliptical shape and/or convex shape.

In the context of the present invention, a device may be provided wherein the sensor 20 is integrated in a printed circuit board 25, wherein the printed circuit board 25 is positioned below the spherical lens 10 and perpendicular to the vertical direction z.

In the context of the present invention, a device may be provided wherein the sensor 20 is configured for differentiating at least between collected solar radiation L1 originating from a left side volume of the driver's cabin 210 and collected solar radiation L1 originating from a right side volume of the driver's cabin 210, and in particular collected solar radiation L1 originating from a front volume of the driver's cabin 210, wherein in particular the sensor 20 comprises a four quadrant diode and/or two ASIC devices.

Fig. 3 shows three volumetric sections 10.1, 10.2, 10.3 for the spherical lens 10, wherein the number is doubled in Fig. 5, which provides a left and a right part of the spherical section 10. This can be advantageous to provide specific and/or more detailed (separated) information about solar radiation on the left and right. Accordingly, two sensors 20 can be provided below the respective parts of the spherical lens 10.

In the context of the present invention, a device may be provided wherein the device 100 comprises a housing 50 configured for receiving the spherical lens 10, the sensor 20 and the interface 30, wherein in particular the printed circuit board 25 and/or the interface 30 is located at a bottom of the housing 50.

In the context of the present invention, a device may be provided wherein the device 100, in particular the housing 50, comprises a cover 60 in which the spherical lens 10 is integrated, wherein in particular the cover 60 is oriented perpendicular to the vertical direction z.

Fig. 4 and 5 show three holes in the printed circuit board 25, which can be contacted and/or penetrated by three press fit pins (shown in Fig. 4), for providing a data communication and/or power supply.

### List of reference signs

- 10: spherical lens
- 10.1, 10.2, 10.3: volumetric sections
- 20: sensor
- 25: printed circuit board
- 30: interface
- 50: housing
- 51: counter-latching device
- 60: cover
- 61: latching device
- 100: device
- 110: providing
- 120: measuring
- 130: transmitting
- 140: controlling
- 200: commercial vehicle
- 210: driver's cabin
- 211: interior of the driver's cabin
- ECU: electronic control unit
- CU: computing unit
- MU: memory unit
- f: front side
- r: right side
- I: left side
- L1: solar radiation
- L2: focused light beam
- S3: sensor signal
- x: longitudinal direction
- y: side direction
- z: vertical direction
- a: angle

## Claims

1. Device (100) for measuring (120) solar radiation in the interior (211) of a driver's cabin (210) of a commercial vehicle (200), comprising:
- a spherical lens (10) configured for providing a focused light beam (L2) opposite to a vertical direction (z) based on collected solar radiation (L1) which is specific for the interior (211) of a driver's cabin (210) of a commercial vehicle (200),
- a sensor (20) configured for measuring (120) the focused light beam (L2), wherein the sensor (20) is configured for providing a sensor signal (S3) based on the measured focused light beam (L2),
- an interface (30) configured for transmitting (130) the sensor signal (S3) to an electronic control unit (ECU).

2. Device (100) according to claim 1,
**characterized in that,**
the spherical lens (10) is configured for collecting solar radiation (L1) from at least
- a front side (f) of the device (100), which is oriented perpendicular to a longitudinal direction (x), wherein in particular the vertical direction (z) is oriented perpendicular to the longitudinal (x) direction, and
- a left side (I) of the device (100), which is oriented perpendicular to a side direction (y), wherein in particular the side direction (y) is oriented perpendicular to the longitudinal (x) direction and the vertical direction (z), and
- a right side (r) of the device (100), which is oriented perpendicular to the side direction (y).

3. Device (100) according to claim 1 or 2,
**characterized in that**,
the spherical lens (10) is configured for collecting solar radiation (L1) from an angle (a) of at least 120°, in particular 180°, wherein in particular the angle (a) covers the front side (f), the left side (I) and the right side (r) of the device (100).

4. Device (100) according to any one of the preceding claims,
**characterized in that**,
the spherical lens (10) comprises at least partially a convex shape.

5. Device (100) according to any one of the preceding claims,
**characterized in that**,
the spherical lens (10) comprises at least three volumetric sections (10.1, 10.2, 10.3), in particular comprising at least in parts an elliptical shape and/or convex shape.

6. Device (100) according to any one of the preceding claims,
**characterized in that**,
the sensor (20) is integrated in a printed circuit board (25), wherein the printed circuit board (25) is positioned below the spherical lens (10) and perpendicular to the vertical direction (z).

7. Device (100) according to any one of the preceding claims,
**characterized in that**,
the sensor (20) is configured for differentiating at least between collected solar radiation (L1) originating from a left side volume of the driver's cabin (210) and collected solar radiation (L1) originating from a right side volume of the driver's cabin (210), and in particular collected solar radiation (L1) originating from a front volume of the driver's cabin (210), wherein in particular the sensor (20) comprises a four quadrant diode and/or ASIC device.

8. Device (100) according to any one of the preceding claims,
**characterized in that**,
the device (100) comprises a housing (50) configured for receiving the spherical lens (10), the sensor (20) and the interface (30), wherein in particular the printed circuit board (25) [and/or the interface (30)] is located at a bottom of the housing (50).

9. Device (100) according to any one of the preceding claims,
**characterized in that**,
the device (100), in particular the housing (50), comprises a cover (60) in which the spherical lens (10) is integrated, wherein in particular the cover (60) is oriented perpendicular to the vertical direction (z).

10. Device (100) according to preceding claim 9,
**characterized in that**,
the cover (60) comprises a latching device (61) configured for engaging with a [complementary formed] counter-latching device (51) of the housing (50).

11. Method for measuring (120) solar radiation (L1) in the interior (211) of a driver's cabin (210) of a commercial vehicle (200), comprising:
- providing (110) a device (100) according to any one of the preceding claims,
- measuring (120), by a sensor (20) of the device (100), a focused light beam (L2) which is specific for the interior (211) of a driver's cabin (210) of a commercial vehicle (200), to provide a sensor signal (S3),
- transmitting (130) the sensor signal (S3) via an interface (30) of the device (100) to an electronic control unit (ECU),
- controlling (140), by the electronic control unit (ECU), a temperature in the interior (211) of the driver's cabin (210), in particular in a part of the driver's cabin (210).

12. Computer program product comprising instructions which, when the computer program product is executed by a computer, cause the computer to implement the method according to preceding claim 11.

13. Computer-readable storage medium in which instructions are stored which, when executed by a computer, cause the computer to implement the method according to the preceding claim 11.

14. Electronic control unit (ECU), comprising a computing unit (CU) and/or a memory unit (MU), in which instructions are stored which, when at least partially executed by the computing unit (CU), implement a method according to the preceding claim 11.

15. Commercial vehicle (200) comprising a device (100) according to any one of the preceding claims 1 to 10 and/or an electronic control unit (ECU) according to the preceding claim 14.
